# DEMANDE DE BREVET EUROPEEN

(11) **EP 1 041 687 A1**
(43) Date de publication de la demande: **04.10.2000**
(21) Numéro de dépôt: 00400842.1
(22) Date de dépôt: 28.03.2000
(51) Int. Cl.: H01S 3/067

(54) **Amplificateur a fibre optique monobande**

(30) Priorité: 29.03.1999 FR 9903865
(71) Demandeur: ALCATEL, 75008 Paris (FR)
(72) Inventeur: Bayart, Dominique, 92140 Clamart (FR)
(74) Mandataire: Lamoureux, Bernard

(57) **Abrégé**

L'invention concerne un amplificateur à fibre optique monobande 10, comprenant une fibre amplificatrice 4 et des moyens de pompage 3 ainsi que des moyens de renvoi 20, 11renvoyant le bruit d'émission spontanée amplifiée vers la fibre amplificatrice.

L'invention permet de limiter les pertes dues au bruit d'émission spontanée amplifiée par renvoi du bruit d'émission spontanée amplifée vers la fibre amplificatrice dans le sens de propagation opposé à celui du signal à amplifier.

## Description

La présente invention concerne les amplificateurs à fibre optique.

De tels amplificateurs sont utilisés dans les systèmes de transmission à fibre optique pour compenser à intervalles réguliers la perte de ligne. Un amplificateur à fibre optique comprend une fibre dopée, par exemple à l'erbium et des moyens de pompage. L'inversion de population obtenue par le pompage permet l'amplification du signal.

Un problème lié à ce type d'amplificateur est celui du bruit. En effet, on constate une perte de puissance en raison de l'émission stimulée amplifiée (en anglais ASE: "amplified spontaneous emission"). Ce bruit se propage dans la fibre dans les deux sens.

Le bruit d'émission spontanée amplifiée est émis notamment aux longueurs d'onde auxquelles la section efficace d'émission atteint son maximum (par exemple dans la fenêtre de 1,5 µm pour le cas d'une fibre dopée à l'erbium). Il est également d'autant plus élevé que l'inversion de population est importante. Ceci est en particulier le cas à l'extrémité de la fibre dopée adjacente aux moyens de pompage, où le taux de pompage est le plus élevé.

Une solution à ce problème est décrite dans l'article "Low noise operation of Er³⁺ doped silica fibre amplifier around 1,6 µm", de J.Massicot et al., Electron. Lett., 1992, 20, p. 1924-1925. Dans cet article, on propose de diminuer le bruit d'émission spontanée amplifiée d'un amplificateur à fibre dopée à l'erbium en utilisant deux pompes à deux longueurs d'onde différentes. La pompe principale à 1,48 µm est utilisée pour l'obtention d'une forte inversion de population. La pompe auxiliaire à 1,555 µm est utilisée afin de saturer l'amplificateur et de ramener l'inversion de population à 35%, ce qui permet de diminuer l'accumulation de l'émission spontanée amplifiée.

Ce montage présente notamment l'inconvénient de nécessiter deux pompes de longueur d'onde différente, ce qui rend le dispositif compliqué et coûteux.

Y. Sun et al. décrit dans l'article "80 nm ultrawideband erbium-doped silica fibre amplifier", Electron. Lett., 1997, 23, p. 1965-1967 un amplificateur à fibre dopée à l'erbium composé de deux sections, une première section commune et une seconde section à bande divisée. Après passage dans la première section d'amplification, les canaux optiques sont divisés en deux bandes de longueur d'onde, la bande C et la bande L. Des circulateurs et des réseaux de Bragg à bande large intégrés dans la fibre et réfléchissant la bande C sont utilisés pour multiplexer et démultiplexer respectivement les deux bandes avant et après la seconde section. Ainsi, l'amplification est effectuée dans la seconde section séparément pour chacune des bandes.

Cependant, ce document ne mentionne pas le problème de la réduction du bruit d'émission spontanée amplifiée.

L'invention propose un amplificateur à fibre optique monobande permettant de limiter la perte de puissance due au bruit d'émission spontanée amplifiée. Elle propose une solution simple et peu coûteuse, qui peut être mise en oeuvre facilement.

Plus précisément, l'invention propose un amplificateur à fibre optique monobande comprenant une fibre amplificatrice, des moyens de pompage de la fibre amplificatrice, et des moyens de renvoi du bruit d'émission spontanée amplifiée vers la fibre amplificatrice, dans lequel les moyens de renvoi comprennent un port d'entrée pour prélever le bruit d'émission spontanée amplifiée en amont de la fibre amplificatrice, par rapport au sens de propagation d'un signal optique à amplifier, et un port de sortie pour injecter ledit bruit prélevé en aval de ladite fibre amplificatrice, dans le sens de propagation opposé à celui dudit signal optique à amplifier.

Dans un mode de réalisation préféré, les moyens de renvoi comprennent un circulateur et une fibre de renvoi, le circulateur renvoyant le bruit d'émission spontanée amplifiée vers la fibre de renvoi, la fibre de renvoi étant couplée à la fibre amplificatrice.

Avantageusement, les moyens de pompage sont disposés entre la fibre amplificatrice et les moyens de renvoi.

De préférence, les signaux amplifiés par l'amplificateur présentent une longueur d'onde voisine de 1585 nm.

Les moyens de pompage émettent par exemple à une longueur d'onde voisine de 1480 nm ou 980 nm.

Avantageusement, la fibre amplificatrice est une fibre dopée par des ions terres rares.

L'invention concerne aussi système de transmission par fibre optique qui comprend un amplificateur selon l'une des revendications précédentes.

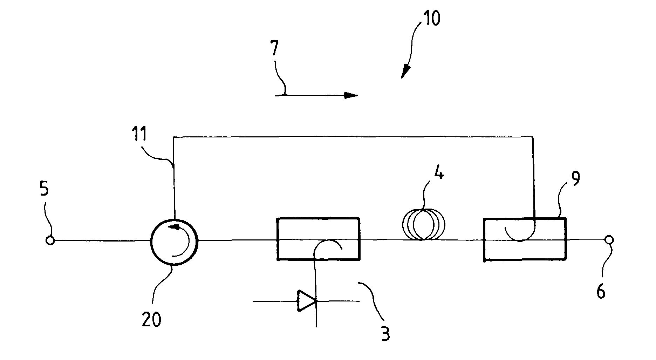

D'autres caractéristiques et avantages de l'invention apparaîtront à la lecture de la description qui suit d'un mode de réalisation de l'invention, donnée à titre d'exemple et en référence à la figure unique.

L'invention propose de limiter la perte de puissance due au bruit d'émission spontanée amplifiée dans un amplificateur à fibre optique grâce à des moyens de renvoi renvoyant le bruit vers la fibre dopée. Ainsi, le bruit d'émission spontanée amplifiée est renvoyé et est maintenu dans la fibre dopée. Ce renvoi du bruit d'émission spontanée amplifiée vers la fibre dopée peut être réalisé notamment au moyen d'un circulateur et d'une fibre additionnelle de renvoi vers la fibre dopée.

Le bruit d'émission spontanée amplifiée, une fois renvoyé, peut alors contribuer au pompage le long de la fibre dopée. Par conséquent, l'invention permet d'augmenter l'efficacité de conversion de puissance de l'amplificateur.

La figure unique montre une représentation schématique d'un mode de réalisation d'un amplificateur à fibre optique selon l'invention.

On a illustré sur cette figure un mode de réalisation d'un amplificateur à fibre optique selon l'invention qui reçoit un signal à amplifier par une entrée 5, et fournit un signal amplifié sur une sortie 6. L'amplificateur comprend une fibre dopée 4 et des moyens de pompage 3.

On peut notamment utiliser une fibre dopée à l'erbium. Les fibres dopées à l'erbium présentent une bande d'émission vers 1,54 µm et sont aussi utilisées pour des amplificateurs dans la région de 1,6 µm.

La structure et le fonctionnement d'un tel amplificateur sont connus en soi.

La fibre dopée peut être pompée par un pompage dans le sens de propagation du signal indiqué par la flèche 7, ou en sens inverse, ou par deux moyens de pompage dirigés dans les deux sens.

La puissance de pompe est commandée de façon connue en soi, et n'est pas décrite plus en détail.

Dans l'exemple illustré sur la figure, l'amplificateur à fibre optique 10 comporte une pompe émettant en direction de propagation du signal comme l'indique la flèche 7. Compte tenu de la nature bidirectionnelle de la fibre optique, ce pompage peut être réalisé également en sens inverse. De même, une disposition de deux pompes émettant dans les deux sens est possible et compatible avec l'amplificateur selon l'invention.

Dans le cas de la figure, les moyens de renvoi comprennent un circulateur 20 et une deuxième fibre 11 ou fibre de renvoi.

Le circulateur 20 reçoit sur une première entrée le signal à amplifier, et transmet ce signal à amplifier vers une deuxième entrée, en direction de la fibre dopée. Le circulateur reçoit sur la deuxième entrée le bruit d'émission spontanée amplifiée, et renvoie ce bruit vers sa troisième entrée, à laquelle est reliée la fibre de renvoi 11.

La fibre de renvoi 11 est reliée à la fibre dopée 4 par un coupleur 9, de sorte que le bruit provenant de la fibre de renvoi est couplé dans la fibre dopée.

Dans le mode de réalisation de la figure, les moyens de pompage 3 sont disposés entre le circulateur 20 et la fibre dopée ; comme expliqué plus bas, cette configuration permet de renvoyer vers la fibre dopée le bruit d'émission spontanée amplifiée existant au voisinage des moyens de pompage.

Le mode de réalisation de la figure n'affecte pas la transmission du signal dans la mesure où le circulateur 20 remplace un isolateur habituellement prévu dans ce type d'amplificateur; les pertes d'insertion du circulateur sont du même ordre de grandeur que celles d'un isolateur. Ce mode de réalisation permet de renvoyer le bruit d'émission spontanée amplifiée vers la fibre dopée, dans un sens inverse du sens de propagation du signal.

L'invention s'applique notamment aux amplificateurs monobande. Un amplificateur à fibre optique monobande traite l'ensemble des signaux utiles dans une même fibre et ne sépare pas les signaux utiles par longueur d'onde ou par groupes de longueur d'onde, à l'aide de dispositifs de démultiplexage.

L'invention propose en outre un système de transmission par fibre optique comprenant au moins un amplificateur à fibre optique monobande selon l'invention. On peut utiliser dans un système de transmission uniquement des amplificateurs selon l'invention, ou une combinaison d'amplificateurs selon l'invention et d'amplificateurs classiques.

Enfin, l'invention propose l'utilisation de moyens de renvoi dans un amplificateur à fibre optique afin de renvoyer le bruit d'émission spontanée amplifiée vers la fibre dopée. Ce procédé s'applique aux amplificateurs monobande comme aux autres.

Bien entendu, la présente invention n'est pas limitée aux exemples et modes de réalisation décrits et représentés, mais elle est susceptible de nombreuses variantes accessibles à l'homme de l'art.

Enfin, l'invention a été décrite dans le cas de fibres dopées par des ions terres rares ; elle s'applique aussi à d'autres types de fibres d'amplification, comme par exemple les fibres utilisées pour l'amplification par diffusion stimulée Raman.

## Revendications

1. Un amplificateur à fibre optique monobande comprenant une fibre amplificatrice (4), des moyens de pompage (3) de la fibre amplificatrice, et des moyens de renvoi (20, 11) du bruit d'émission spontanée amplifiée vers la fibre amplificatrice, caractérisé en ce que les moyens de renvoi comprennent un port d'entrée pour prélever le bruit d'émission spontanée amplifiée en amont de la fibre amplificatrice, par rapport au sens de propagation d'un signal optique à amplifier, et un port de sortie pour injecter ledit bruit prélevé en aval de ladite fibre amplificatrice, dans le sens de propagation opposé à celui dudit signal optique à amplifier.

2. Un amplificateur selon la revendication 1, caractérisé en ce que les moyens de renvoi comprennent un circulateur (20) et une fibre de renvoi (11), le circulateur renvoyant le bruit d'émission spontanée amplifiée vers la fibre de renvoi (11), la fibre de renvoi étant couplée à la fibre amplificatrice (4).

3. Un amplificateur selon la revendication 1 ou 2, caractérisé en ce que les moyens de pompage (3) sont disposés entre la fibre amplificatrice (4) et les moyens de renvoi (20, 11).

4. Un amplificateur selon l'une des revendications 1 à 3, caractérisé en ce que les signaux amplifiés par l'amplificateur présentent une longueur d'onde voisine de 1585 nm.

5. Un amplificateur selon l'une des revendications 1 à 4, caractérisé en ce que les moyens de pompage (3) émettent à une longueur d'onde voisine de 1480 nm ou 980 nm.

6. Un amplificateur selon l'une des revendications 1 à 9, caractérisé en ce que la fibre amplificatrice est une fibre dopée par des ions terres rares.

7. Un système de transmission par fibre optique, caractérisé en ce qu'il comprend un amplificateur selon l'une des revendications précédentes.
